# EUROPEAN PATENT APPLICATION

(11) **EP 4 815 063 A1**
(43) Date of publication of application: **30.09.2026**
(21) Application number: 24894261.7
(22) Date of filing: 29.03.2024
(51) Int. Cl.: H01M 4/62, H01M 4/13, H01M 10/0562, H01M 4/139, H01M 10/052, H01M 4/02

(54) **POSITIVE ELECTRODE, MANUFACTURING METHOD THEREOF, AND ALL-SOLID-STATE RECHARGEABLE BATTERIES**

(30) Priority: 22.11.2023 KR 20230163560
(71) Applicant: SAMSUNG SDI CO., LTD., Yongin-si, Gyeonggi-do 17084 (KR)
(72) Inventor: KANG, Dongwoo, Yongin-si, Gyeonggi-do 17084 (KR); AN, Seonhyeok, Yongin-si, Gyeonggi-do 17084 (KR); KIM, Jinhee, Yongin-si, Gyeonggi-do 17084 (KR); YOU, Hoseon, Yongin-si, Gyeonggi-do 17084 (KR)
(74) Representative: Michalski Hüttermann & Partner mbB
(86) International application number: PCT/KR2024/004089
(87) International publication number: WO 2025/110363

(57) **Abstract**

The present disclosure relates to a positive electrode, a method of manufacturing the same, and all-solid-state rechargeable battery, the positive electrode comprising a positive electrode current collector; and a positive electrode active material layer on the positive electrode current collector wherein the positive electrode active material layer includes a positive electrode active material, a sulfide-based solid electrolyte, a binder, and a conductive material, the conductive material includes a carbon nanotube and a carbon nanoparticle, the carbon nanotube is included in an amount of 40 wt% to 90 wt%, and the carbon nanoparticle is included in an amount of 10 wt% to 60 wt% based on 100 wt% of a total of the carbon nanotube and carbon nanoparticle.

## Description

### [Technical Field]

Positive electrodes, manufacturing methods thereof, and all-solid-state rechargeable batteries are disclosed.

### [Background Art]

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Because commercially available rechargeable lithium batteries use an electrolyte solution containing a flammable organic solvent, there is a safety problem in that the battery may explode or catch fire in the event of problems such as collision or penetration. Accordingly, all-solid-state rechargeable batteries, which use a solid electrolyte instead of an electrolyte solution, have been proposed. All-solid-state rechargeable batteries are batteries in which all materials are composed of solids, and they are advantageous in that they are safe because there is no danger of the electrolyte solution leaking and exploding, and it is easy to manufacture thin batteries.

The positive electrode of an all-solid-state rechargeable battery contains various organic and inorganic materials such as a positive electrode active material, a solid electrolyte, a conductive material, and a binder. However, in the case of a sulfide-based solid electrolyte having excellent ionic conductivity among solid electrolytes, there is a concern that it may be easily deteriorated by air, moisture, polar solvents, or under high-temperature conditions, thereby affecting the performance of the all-solid-state battery.

### [Disclosure]

### [Technical Problem]

According to an embodiment, a positive electrode and an all-solid-state rechargeable battery capable of improving the dispersibility of slurry and improving conductivity are provided. Or, according to an embodiment, a positive electrode and an all-solid-state rechargeable battery capable of improving the quality and productivity of a positive electrode plate are provided.

### [Technical Solution]

In an embodiment, provided is a positive electrode comprising a positive electrode current collector; and a positive electrode active material layer on the positive electrode current collector, wherein the positive electrode active material layer includes a positive electrode active material, a sulfide-based solid electrolyte, a binder, and a conductive material, the conductive material includes a carbon nanotube and a carbon nanoparticle, and the carbon nanotube is included in an amount of 40 wt% to 90 wt%, and the carbon nanoparticle is included in an amount of 10 wt% to 60 wt% based on 100 wt% of a total of the carbon nanotube and carbon nanoparticle.

In another embodiment, provided is a method of manufacturing a positive electrode which includes dry mixing a positive electrode active material, a sulfide-based solid electrolyte, and a carbon nanoparticle, and adding and mixing a binder and a carbon nanotube to a mixture of the dry mixing to obtain a positive electrode active material slurry, wherein the carbon nanotube is added in an amount of 40 wt% to 90 wt% and the carbon nanoparticle is added in an amount of 10 wt% to 60 wt% based on 100 wt% of a total of the carbon nanotube and carbon nanoparticle.

In another embodiment, provided is an all-solid-state rechargeable battery including the aforementioned positive electrode; a negative electrode; and a solid electrolyte layer between the positive electrode and the negative electrode.

### [Advantageous Effects]

According to an embodiment, a positive electrode and an all-solid-state rechargeable battery capable of improving the dispersibility and conductivity of slurry may be provided. Also, according to an embodiment, a positive electrode, a manufacturing method thereof, and an all-solid-state rechargeable battery capable of improving the quality and productivity of a positive electrode plate may be provided.

### [Description of the Drawings]

FIG. 1 and FIG. 2 are cross-sectional views schematically showing all-solid-state rechargeable batteries according to embodiments.
FIG. 3 is a schematic view schematically showing a positive electrode active material layer of the all-solid-state rechargeable battery cell according to Comparative Example.
FIG. 4 is a schematic view schematically showing a clustering tendency of carbon nanoparticles according to an embodiment.
FIG. 5 is a schematic view schematically showing a positive electrode active material layer of the all-solid-state rechargeable battery according to an embodiment.
FIG. 6 is an image taken with a scanning electron microscope (SEM) at 10,000 magnification for a cross-section of a positive electrode active material layer prepared in Comparative Example 1.
FIG. 7 is a graph showing viscosity change according to shear rate (1/s) of positive electrode active material slurries obtained from Comparative Examples 1 and 2 and Examples 1 and 2.
FIG. 8 is an enlarged view showing an enlarged rectangular portion of FIG. 7.
FIG. 9 is a graph showing measurement results of electronic conductivity and ionic conductivity through Electrochemical Impedance Spectroscopy (EIS) for positive electrodes obtained from Comparative Examples 1 to 3 and Examples 1 and 2.
FIG. 10 is a graph showing changes in discharge capacity for all-solid-state rechargeable battery cells manufactured in Comparative Example 1 and Examples 1 and 2.
FIG. 11 is a graph showing measurement results of average discharge voltage for all-solid-state rechargeable battery cells manufactured in Comparative Example 1 and Examples 1 and 2.

### [Best Mode]

Hereinafter, embodiments of the present invention will be described in detail. However, this is presented as an example, and the present invention is not limited thereby, and the present invention is only defined by the scope of the claims described later.

As used herein, when specific definition is not otherwise provided, it will be understood that when an element such as a layer, film, region, or substrate is referred to as being "on" another element, it can be directly on the other element or intervening elements may also be present.

In the present specification, unless otherwise specified, expressions in the singular may also include the plural. In addition, unless otherwise specified, "A or B" may mean "including A, including B, or including A and B."

In the present specification "combination thereof" may refer to a mixture, a laminate, a composite, a copolymer, an alloy, a blend, a reaction product, and the like of the constituents.

In the present specification, when a definition is not otherwise provided, the particle diameter may be an average particle diameter. In addition, the particle diameter may refer to an average particle diameter (D50), which means the diameter of particles having a cumulative volume of 50 vol% in the particle size distribution. The average particle diameter (D50) may be measured by a method well known to those skilled in the art, for example, by a particle size analyzer, or by a transmission electron microscope image, or a scanning electron microscope image. Alternatively, a dynamic light-scattering measurement device is used to perform a data analysis, and the number of particles is counted for each particle size range. From this, the average particle diameter (D50) value may be easily obtained through a calculation. Alternatively, it can be measured using a laser diffraction method. When measuring by the laser diffraction method, more specifically, the particles to be measured are dispersed in a dispersion medium, and then introduced into a commercially available laser diffraction particle diameter measuring device (e.g., Microtrac MT 3000), and ultrasonic waves of about 28 kHz with a power of 60 W are irradiated to calculate an average particle diameter (D50) on the basis of 50% of the particle diameter distribution in the measuring device.

### Positive Electrode

In an embodiment, a positive electrode comprising a positive electrode current collector; and a positive electrode active material layer on the positive electrode current collector, wherein the positive electrode active material layer includes a positive electrode active material, a sulfide-based solid electrolyte, a binder, and a conductive material, the conductive material includes a carbon nanotube and a carbon nanoparticle, and the carbon nanotube is included in an amount of 40 wt% to 90 wt%, and the carbon nanoparticle is included in an amount of 10 wt% to 60 wt% based on 100 wt% of a total of the carbon nanotube and carbon nanoparticle.

The positive electrode active material layer includes a positive electrode active material, a sulfide-based solid electrolyte, a binder, and a conductive material. That is, the positive electrode slurry of the all-solid-state rechargeable battery is composed of various inorganic and organic materials such as a positive electrode active material, a solid electrolyte, a conductive material, and a binder. Among solid electrolytes, a sulfide-based solid electrolyte having excellent ionic conductivity is used, but the sulfide-based solid electrolyte has a characteristic of being easily deteriorated by air, moisture, polar solvents, or high temperature. Therefore, when a sulfide-based solid electrolyte is used, a low-polarity solvent is used instead of a polar solvent in consideration of reactivity. Carbon nanotubes as a conductive material are used because they have excellent electrochemical characteristics, but agglomeration easily occurs in a solution due to their own strong interaction. Such agglomeration of carbon nanotubes may increase the viscosity of the positive electrode slurry, thereby reducing the storage stability of the slurry and the production quality of the electrode plate, and also conductivity may be lowered. Accordingly, there is a method of improving the phase stability of the slurry by increasing the dispersibility of the carbon nanotubes themselves, but there is a limit due to the low dispersibility of carbon nanotubes in low-polarity solvents selected in consideration of the reactivity of the sulfide-based solid electrolyte.

In an embodiment, we propose a positive electrode capable of improving the dispersibility of slurry and the conductivity of a battery, and improving the quality and productivity of an electrode plate.

### Conductive Material

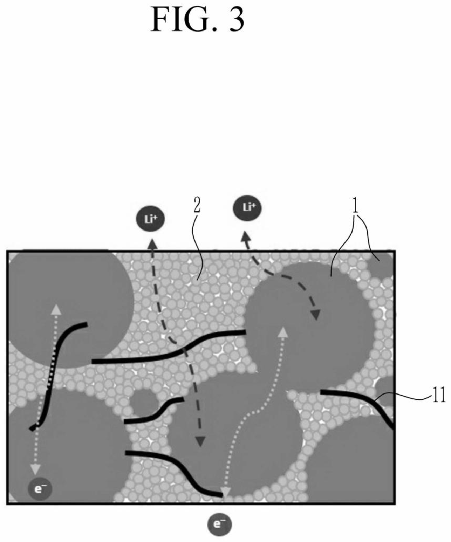

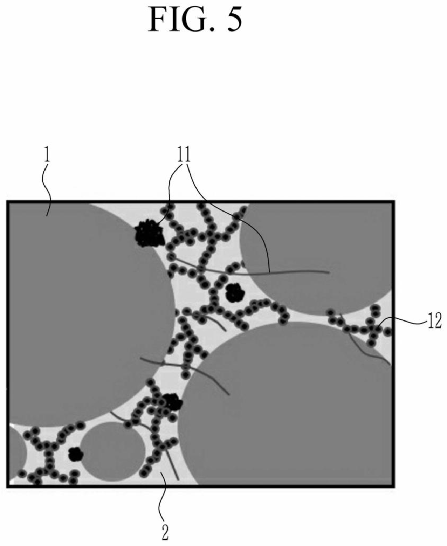

The positive electrode active material layer includes carbon nanotube and carbon nanoparticle as conductive materials. FIG. 3 shows a schematic view of a positive electrode active material layer of an all-solid-state rechargeable battery according to a comparative example as a case where only carbon nanotube are included as a conductive material and carbon nanoparticle are not included in the positive electrode active material layer. Also, FIG. 5 shows a schematic view of a positive electrode active material layer of an all-solid-state rechargeable battery according to an embodiment. As shown in FIG. 3, ions move through the solid electrolyte 2 to secure a path for ionic conduction, and connectivity between the positive electrode active material 1 and the carbon nanotube 11 as a conductive material is secured through the carbon nanotube 11 to secure a path for electronic conduction. However, the carbon nanotube may be dispersed in a non-uniform form within the positive electrode active material layer, so its utility in terms of conductivity is somewhat low. Meanwhile, carbon nanoparticle such as carbon black may be more advantageous than carbon nanotube in terms of dispersibility. Accordingly, in an embodiment, by mixing and using carbon nanoparticle such as carbon black together with carbon nanotube as a conductive material to perform an auxiliary role in the positive electrode, a network of electronic conduction and ionic conduction may be improved without hindering connectivity of the solid electrolyte. Therefore, as shown in FIG. 5, by using carbon nanoparticle 12 together as a conductive material in the positive electrode active material layer in addition to the carbon nanotube 11, the path of electronic conduction may be secured more uniformly and densely compared to the case of FIG. 3.

For example, the carbon nanotube may be a single-wall carbon nanotube (SWCNT), a double-walled carbon nanotube (DWCNT), a multi-wall carbon nanotube (MWCNT), or a combination thereof. Alternatively, the carbon nanotube may be a short length CNT (S-carbon nanotube), a long length CNT (L-carbon nanotube), or a combination thereof, and in particular, may be an L-carbon nanotube. When such a carbon nanotube is used as a conductive material in a positive electrode active material layer, an electronic network may be improved by securing connectivity between the positive electrode active material and the conductive material distributed between solid electrolytes.

The carbon nanoparticle may be, for example, carbon black, acetylene black, Ketjen black, Denka black, or a combination thereof. When the carbon nanoparticle is used, it is not only advantageous in terms of securing the dispersibility of the slurry compared to the case of using only carbon nanotube, but it is also easy in terms of the manufacturing process because there is no need to prepare the slurry in the form of a pre-dispersion.

In the positive electrode active material layer, the carbon nanotube is included in an amount of 40 wt% to 90 wt%, and the carbon nanoparticle is included in an amount of 10 wt% to 60 wt% based on 100 wt% of a total of the carbon nanotube and carbon nanoparticle. Within these ranges, the resistance of the electrode plate may be lowered, cell performance may be improved, and structural stability may also be promoted by maintaining the balance of electronic conduction and ionic conduction while improving dispersibility in the positive electrode slurry.

According to an embodiment, in the positive electrode active material layer, the carbon nanoparticles may form an aggregate by connecting primary particles to each other. Alternatively, the primary particles and the aggregate may gather together to form an agglomerate. In this case, the unit of the cluster shape of the carbon nanoparticles in the positive electrode active material layer may be expanded from a nanometer unit to a micrometer unit, and thereby electronic conductivity and ionic conductivity may be harmoniously improved.

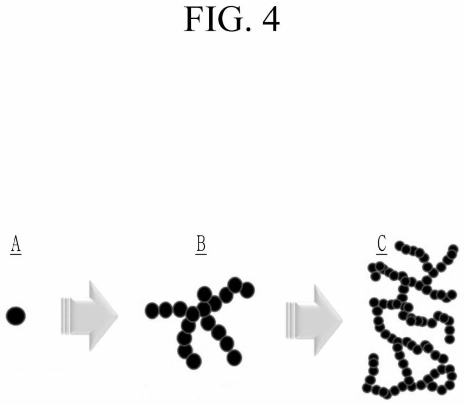

FIG. 4 shows a schematic diagram of a clustering tendency for carbon nanoparticles in a positive electrode active material layer according to an embodiment. In the positive electrode active material layer, the carbon nanoparticles may form an aggregate as shown in FIG. 4B by connecting primary particles as shown in FIG. 4A to each other. In addition, the primary particles and the aggregate may gather together to form an agglomerate as shown in FIG. 4C. At this time, the agglomerate may be one in which the primary particles and the aggregate are clumped together with a weaker attractive force than the aggregate. In this case, carbon nanoparticles in the positive electrode active material layer are connected to secure a path for electronic conduction more uniformly and densely, and the network of electronic conduction may be improved in the positive electrode active material layer as a whole.

According to an embodiment, an average particle size (D50) of the primary particles of the carbon nanoparticles may be 1 nm to 50 nm, for example, 3 nm to 45 nm, 5 nm to 43 nm, or 10 nm to 40 nm. Within the range, electronic conductivity and ionic conductivity may be harmoniously improved without hindering the connectivity of the solid electrolyte.

The positive electrode active material layer may include 0.01 wt% to 5 wt% of a conductive material based on 100 wt% of the positive electrode active material layer.

According to an embodiment, the positive electrode active material layer may further include a low-polarity solvent having a polarity index (PI) of 0.074 to 0.281. When such a low-polarity solvent is used, the performance of the battery may be improved because it does not increase cell resistance due to its low reactivity with the sulfide-based solid electrolyte. Herein, the polarity index may mean a relative polarity index when the polarity index of water is set to 9.0, and polarity index values disclosed by generally known literatures may be used.

In an embodiment, the low-polarity solvent may have a polarity index of 0.074 to 0.281 and be selected from a pyridine-based solvent, a benzene-based solvent, an acetate-based solvent, a ketone-based solvent, an ester-based solvent, an ether-based solvent, a carbonate-based solvent, an acrylate-based solvent, an aldehyde-based solvent, a piperidine-based solvent, a sulfite-based solvent, an alkyl-based solvent, a formate-based solvent, or a combination thereof. The pyridine-based solvent is a solvent containing a pyridine ring in its structure, and examples thereof include 2,6-di-tert-butylpyridine, 2-vinylpyridine, acetylpyridine, 2-chloropyridine, and the like. The benzene-based solvent is a solvent containing a benzene ring in its structure, and examples thereof include bromobenzene, p-chlorotoluene, benzal chloride, N,N-dimethylaniline, styrene oxide, methoxybenzene (anisole), butyl benzoate, benzaldehyde, benzeneacetonitrile, and the like. The acetate-based solvent is a solvent containing acetate in its structure, and examples thereof include ethyl chloroacetate, 2-ethylhexyl acetate, and the like. The ketone-based solvent is a solvent containing a ketone group in its structure, and examples thereof include methyl isoamyl ketone, di-tert-butyl ketone, ethyl amyl ketone, diisobutyl ketone, cyclopentanone, 4-heptanone, 5-methyl-3-heptanone, and the like. The ester-based solvent is a solvent containing an ester group in its structure, and examples thereof include methyl laurate, n-butyl propionate, diketene, methyl oleate, and the like. The ether-based solvent is a solvent containing an ether group in its structure, and examples thereof include 1,8-cineole and the like. The carbonate-based solvent is a solvent containing a carbonate group in its structure, and examples thereof include diethyl carbonate, diethyl carbonate, and the like. The acrylate-based solvent includes n-butyl acrylate, n-butyl methacrylate, isobutyl methacrylate, and the like. The aldehyde-based solvent is a solvent containing an aldehyde group in its structure, and examples thereof include ethylhexaaldehyde and the like. The piperidine-based solvent is a solvent containing piperidine in its structure, and examples thereof include 1-formylpiperidine and the like. The sulfite-based solvent is a solvent containing sulfite in its structure, and examples thereof include ethylene sulfite and the like. The alkyl-based solvent is a solvent containing an alkyl group in its structure, and examples thereof include 1,2,3-trichloropropane, chlorocyclohexane, and the like. The formate-based solvent is a solvent containing a formate group in its structure, and examples thereof include amyl formate and the like.

For example, the positive electrode active material layer may include the low-polarity solvent in an amount of 500 ppm or less based on 100 wt% of the positive electrode active material layer. Examples of such a low-polarity solvent include 2,6-di-tert-butylpyridine, bromobenzene, benzyl chloride, p-chlorotoluene, benzal chloride, o-dichlorobenzene, N,N-dimethylaniline, benzyl bromide, 1,2,3-trichloropropane, methoxybenzene (anisole), ethoxybenzene, 2-vinylpyridine, chlorocyclohexane, methyl laurate, ethyl chloroacetate, 2-ethylhexyl acetate, o-chlorobenzylchloride, diethyl carbonate, ethyl trichloroacetate, n-butyl acrylate, methyl isoamyl ketone, di-tert-butyl ketone, styrene oxide, diketene, ethylhexaaldehyde, n-butyl methacrylate, diisopropyl ketone, sec-amyl acetate, methyl amyl acetate, n-butyl propionate, n-pentyl propionate, n-pentyl propionate, 1-formylpiperidine, butyl benzoate, 4-heptanone, 1,8-cineole, isobutyl methacrylate, benzeneacetonitrile, methyl benzoate, isobutylyl isobutylate, octyl acetate, acetylpyridine, methyl oleate, methyl amyl ketone, 5-methyl-3-heptanone, amyl formate, diisobutyl ketone, ethyl amyl ketone, ethylene sulfite, dibutyl ketone, cyclopentanone, 2-chloropyridine, ethyl phenylacetate, diethyl carbonate, benzaldehyde, isoamyl acetate, methyl hexyl ketone, ethyl benzoate, phenyl acetate, or a combination thereof. When the aforementioned low-polarity solvent is used, an appropriate viscosity of the slurry may be realized, uniform coating in an electrode plate may be enabled, and it may contribute to the improvement of conductivity and the improvement of battery performance, without increasing cell resistance due to low reactivity with the sulfide-based solid electrolyte.

### Positive Electrode Active Material

As the positive electrode active material, a compound capable of reversible intercalation and deintercalation of lithium (lithiated intercalation compound) may be used. For example, at least one of complex oxides of lithium and a metal selected from cobalt, manganese, nickel, and a combination thereof may be used.

The complex oxide may be a lithium transition metal composite oxide, and specific examples include a lithium nickel-based oxide, a lithium cobalt-based oxide, a lithium manganese-based oxide, a lithium iron phosphate-based compound, a cobalt-free nickel-manganese-based oxide, a lithium-excess layered oxide, or a combination thereof.

As an example, the positive electrode active material may be a high-nickel-based positive electrode active material in which a nickel content based on 100 mol% of metals excluding lithium in a lithium transition metal composite oxide is greater than or equal to 80 mol%. In the high-nickel-based positive electrode active material, the nickel content may be greater than or equal to 85 mol%, greater than or equal to 90 mol%, greater than or equal to 91 mol%, or greater than or equal to 94 mol%, and may be less than or equal to 99 mol%, based on 100 mol% of metals excluding lithium. The high-nickel-based positive electrode active materials may realize high capacity and thus may be applied to high-capacity, high-density rechargeable lithium batteries.

As a more specific example, a compound represented by any one of the following chemical formulas may be used. LiₐA_{1-b}X_{b}O_{2-c}Dc (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤0.5, 0 < a < 2);LiₐNi_{1-b-c}Mn_{b}X_{c}O2-_{α}D_{α} (0.90 ≤ a ≤ 1.8, 0 ≤ b ≤ 0.5, 0 ≤ c ≤ 0.5, 0 < a < 2);LiₐNi_{b}Co_{c}L¹_{d}GeO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1);; LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li₍₃-_{f)}Fe₂(PO₄)₃ (0 ≤ f ≤ 2); LiₐFePO₄ (0.90 ≤ a ≤ 1.8)

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; Q is Ti, Mo, Mn, or a combination thereof; Z is Cr, V, Fe, Sc, Y, or a combination thereof; and L¹ is Mn, Al or a combination thereof.

The positive electrode active material may include, for example, a lithium nickel-based oxide represented by Chemical Formula 1, a lithium cobalt-based oxide represented by Chemical Formula 2, a lithium iron phosphate-based compound represented by Chemical Formula 3, a cobalt-free lithium nickel-manganese-based oxide represented by Chemical Formula 4, or a combination thereof.

[Chemical Formula 1] Liₐ₁Niₓ₁M¹_{y1}M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently an element selected from Al, B, Ba, Ca, Ce, Co, Cr, Cu, Fe, Mg, Mn, Mo, Nb, Si, Sn, Sr, Ti, V, W, Zr, or a combination thereof, and X is an element selected from F, P, S, or a combination thereof.

In Chemical Formula 1, 0.6≤x1≤1, 0≤y1≤0.4, and 0≤z1≤0.4, or 0.8≤x1≤1, 0≤y1≤0.2, and 0≤z1≤0.2 may be satisfied.

[Chemical Formula 2] Liₐ₂Coₓ₂M³_{y2}O_{2-b2}X_{b2}

In Chemical Formula 2, 0.9≤a2≤1.8, 0.7≤x2≤1, 0≤y2≤0.3, 0.9≤x2+y2≤1.1, and 0≤b2≤0.1, M³ is an element selected from Al, B, Ba, Ca, Ce, Cr, Cu, Fe, Mg, Mn, Mo, Ni, Se, Si, Sn, Sr, Ti, V, W, Y, Zn, Zr, or a combination thereof, and X is an element selected from F, P, S, or a combination thereof.

[Chemical Formula 3] Liₐ₃Feₓ₃M⁴_{y3}PO_{4-b3}X_{b3}

In Chemical Formula 3, 0.9≤a3≤1.8, 0.6≤x3≤1, 0≤y3≤0.4, and 0≤b3≤0.1, M⁴ is an element selected from Al, B, Ba, Ca, Ce, Co, Cr, Cu, Mg, Mn, Mo, Ni, Se, Si, Sn, Sr, Ti, V, W, Y, Zn, Zr, or a combination thereof, and X is an element selected from F, P, S, or a combination thereof.

[Chemical Formula 4] Liₐ₄Niₓ₄Mn_{y4}M⁵_{z4}O_{2-b4}X_{b4}

In Chemical Formula 4, 0.9≤a2≤1.8, 0.8≤x4<1, 0<y4≤0.2, 0≤z4≤0.2, 0.9≤x4+y4+z4≤1.1, and 0≤b4≤0.1, M⁵ is an element selected from Al, B, Ba, Ca, Ce, Cr, Fe, Mg, Mo, Nb, Si, Sn, Sr, Ti, V, W, Zr, or a combination thereof, and X is an element selected from F, P, S, or a combination thereof.

An average particle diameter (D50) of the positive electrode active material may be 1 µm to 25 µm, for example 3 µm to 25 µm, 1 µm to 20 µm, 1 µm to 18 µm, 3 µm to 15 µm, or 5 µm to 15 µm. For example, the positive electrode active material may include small particles having an average particle diameter (D50) of 1 µm to 9 µm and large particles having an average particle diameter (D50) of 10 µm to 25 µm. The positive electrode active material having this particle size range may be harmoniously mixed with other components within the positive electrode active material layer and may achieve high capacity and high energy density. Herein, the average particle diameter means a diameter (D50) of particles having a cumulative volume of 50 vol% in the particle size distribution that is obtained by measuring the size (diameter or length of the major axis) of about 20 particles at random in a scanning electron microscope image for positive electrode active materials.

The positive electrode active material may be in the form of secondary particles made by agglomerating a plurality of primary particles or in the form of single particles. Additionally, the positive electrode active material may have a spherical or close to spherical shape, or may have a polyhedral or irregular shape.

Meanwhile, the positive electrode active material may include a buffer layer on the surface of the particles. The buffer layer may be expressed as a coating layer, a protective layer, etc., and may serve to lower the interfacial resistance between the positive electrode active material and the sulfide-based solid electrolyte particles. For example, the buffer layer may include lithium-metal-oxide, wherein the metal may be for example one or more elements selected from Al, B, Ca, Ce, Cr, Fe, Mg, Mo, Nb, Si, Sn, Sr, Ta, V, W, Zr, and a combination thereof. The lithium-metal-oxide improves the performance of the positive electrode active material by facilitating the movement of lithium ions and electronic conduction, and is improved for lowering the interfacial resistance between the positive electrode active material and solid electrolyte particles.

The positive electrode active material may be included in an amount of 55 wt% to 95 wt%, for example 65 wt% to 94 wt%, or 75 wt% to 91 wt% based on 100 wt% of the positive electrode active material layer.

### Binder

The binder serves to well adhere the positive electrode active material particles to each other, and also to well adhere the positive electrode active material to a current collector. For example, the binder may include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but is not limited thereto. Representative examples include that the binder may be a fluorine-based binder such as polyvinyl fluoride, polytetrafluoroethylene, and polyvinylidene fluoride.

The binder may be included in an amount of 0.1 wt% to 5 wt%, for example, 0.1 wt% to 3 wt%, or 0.5 wt% to 2 wt% based on 100 wt% of the positive electrode active material layer.

### Solid Electrolyte

The positive electrode active material layer includes a sulfide-based solid electrolyte. For example, the sulfide-based solid electrolyte may include an argyrodite-type sulfide. Alternatively, the positive electrode active material layer may further include other solid electrolytes other than the aforementioned sulfide-based solid electrolyte. For example, the positive electrode active material layer may further include an oxide-based solid electrolyte, a halide-based solid electrolyte, or a combination thereof. Meanwhile, the following description in the solid electrolyte layer is identically applicable to the aforementioned sulfide-based solid electrolyte and other solid electrolytes.

Based on 100 wt% of the positive electrode active material layer, the solid electrolyte may be included in an amount of 0.1 wt% to 35 wt%, for example, 1 wt% to 35 wt%, 5 wt% to 30 wt%, 8 wt% to 25 wt%, or 10 wt% to 20 wt%.

In the positive electrode active material layer, based on 100 wt% of the total of the positive electrode active material and the solid electrolyte, 65 wt% to 99 wt% of the positive electrode active material and 1 wt% to 35 wt% of the solid electrolyte may be included, for example, 80 wt% to 90 wt% of the positive electrode active material and 10 wt% to 20 wt% of the solid electrolyte may be included. If the solid electrolyte is included in the positive electrode in such an amount, efficiency and cycle-life characteristics of an all-solid-state rechargeable battery may be improved without reducing capacity.

### Other Conductive Material

The positive electrode active material layer may optionally further include additional conductive materials in addition to the aforementioned carbon nanotube and carbon nanoparticle. The conductive material is used to impart conductivity to an electrode, and any electronically conductive material may be used as long as it does not cause chemical change in a battery being constructed. For example, a conductive material including a carbon-based material such as natural graphite, artificial graphite, carbon fiber, and carbon nanofiber; a metal-based material in a form of metal powder or metal fiber containing copper, nickel, aluminum, silver, and the like; a conductive polymer such as a polyphenylene derivative; or a mixture thereof may be used.

An amount of the conductive material in the positive electrode active material layer may be 0.01 wt% to 5 wt%, or 0.05 wt% to 3 wt%, 0.08 wt% to 2 wt%, 0.1 wt% to 2 wt%, or 0.2 wt% to 1 wt%, based on 100 wt% of the positive electrode active material layer.

As the positive electrode current collector, an aluminum foil may be used, but it is not limited thereto.

### Method of Manufacturing Positive Electrode

In another embodiment, provided is a method of manufacturing positive electrode which includes dry mixing a positive electrode active material, a sulfide-based solid electrolyte, and a carbon nanoparticle, and adding and mixing a binder and a carbon nanotube to a mixture of the dry mixing to obtain a positive electrode active material slurry, wherein the carbon nanotube is added in an amount of 40 wt% to 90 wt% and the carbon nanoparticle is added in an amount of 10 wt% to 60 wt% based on 100 wt% of a total of the carbon nanotube and carbon nanoparticle. The above descriptions are about a method of manufacturing the positive electrode according to an embodiment, and hereinafter, descriptions overlapping with the aforementioned contents will be omitted, and a manufacturing process of the positive electrode according to an embodiment will be described in detail.

According to an embodiment, the dry mixing may be performed by adding and mixing the carbon nanoparticle in a powder form to a dry mixture of the positive electrode active material and the sulfide-based solid electrolyte.

The adding of the binder and carbon nanotube may be performed by adding a mixed solution including a binder and carbon nanotube to the mixture of the dry mixing, and as a solvent for the mixed solution, the low-polarity solvent described above for the positive electrode may be used.

Alternatively, the adding of the binder and carbon nanotube may be performed by adding and mixing a binder solution including a binder and a first low-polarity solvent, and a carbon nanotube solution including carbon nanotube and a second low-polarity solvent, to the mixture of the dry mixing.

Alternatively, the binder solution may be added and mixed first to the mixture of the dry mixing, and then the carbon nanotube solution may be added and mixed.

The first low-polarity solvent and the second low-polarity solvent may be, for example, a low-polarity solvent having a polarity index of 0.074 to 0.281, and the above description of the low-polarity solvent in the positive electrode may be identically applied to the low-polarity solvent.

The first low-polarity solvent and the second low-polarity solvent may be the same as each other, or may be different from each other.

Next, the positive electrode active material slurry may be cotated on the aforementioned positive electrode current collector, and at this time, as a coating method, a method commonly known in the art may be used without limitation. For example, coating may be performed using coating equipment (bar coater, comma coater, shutter coater, slot-die coater, gravure coater, spray coater, etc.). For the positive electrode current collector, the contents described above in the positive electrode may be identically applied.

After the coating of the positive electrode active material slurry, the coated positive electrode active material slurry may be dried and rolled to form a positive electrode active material layer on the positive electrode current collector. Herein, the conditions for drying and rolling may follow what is commonly known in the art.

### All-solid-state Rechargeable Battery

In still another embodiment, provided is an all-solid-state rechargeable battery including: the aforementioned positive electrode; a negative electrode; and a solid electrolyte layer between the positive electrode and the negative electrode. Because the all-solid-state rechargeable battery includes a positive electrode according to an embodiment described above, a balance between electronic conduction and ionic conduction is secured, the resistance of the electrode plate may be lowered and cell performance may be improved, and structural stability may be effectively secured.

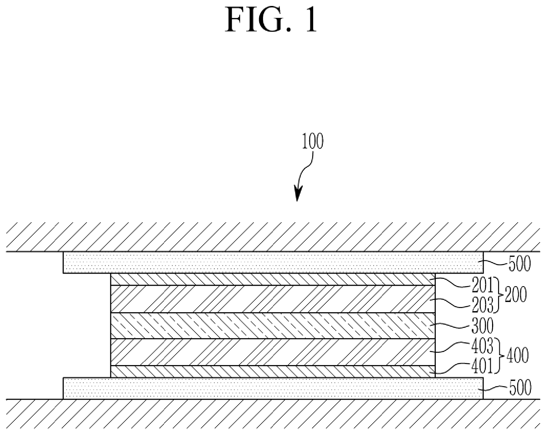

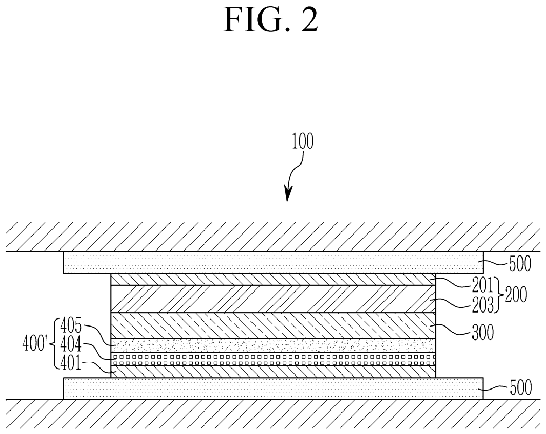

Hereinafter, descriptions overlapping with the aforementioned contents will be omitted, and components of an all-solid-state rechargeable battery according to an embodiment will be described in more detail with reference to FIG. 1 and FIG. 2.

The all-solid-state rechargeable battery may also be expressed as an all-solid-state battery or an all-solid-state rechargeable lithium battery.

FIG. 1 is a cross-sectional view of an all-solid-state rechargeable battery according to an embodiment. referring to FIG. 1, the all-solid-state rechargeable battery 100 may have a structure that an electrode assembly, in which a negative electrode 400 including a negative electrode current collector 401 and a negative electrode active material layer 403, a solid electrolyte layer 300, and a positive electrode 200 including a positive electrode active material layer 203 and a positive electrode current collector 201 are stacked, is housed in a battery case. The all-solid-state rechargeable battery 100 may further include at least one elastic layer 500 on the outside of at least either one of the positive electrode 200 and the negative electrode 400. Although one electrode assembly including a negative electrode 400, a solid electrolyte layer 300, and a positive electrode 200 is shown in FIG. 1, an all-solid-state rechargeable battery may also be manufactured by stacking two or more electrode assemblies.

### Negative Electrode

A negative electrode for an all-solid-state rechargeable battery includes a negative electrode current collector and a negative electrode active material layer on the negative electrode current collector. The negative electrode active material layer includes a negative electrode active material, and may further include a binder, a conductive material, and/or a conductive material.

The negative electrode active material may include a material capable of reversible intercalation/deintercalation of lithium ions, lithium metal, a lithium metal alloy, a material capable of doping and dedoping lithium, or a transition metal oxide.

The material capable of reversible intercalation/deintercalation of lithium ions may include a carbon-based negative electrode active material, for example, crystalline carbon, amorphous carbon, or a combination thereof. Examples of the crystalline carbon include graphite such as amorphous, platelike, flake, spherical, or fiber-type natural graphite or artificial graphite, and examples of the amorphous carbon include soft carbon or hard carbon, mesophase pitch carbonized product, calcined coke, and the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping and dedoping lithium may include a Si-based negative electrode active material or a Sn-based negative electrode active material. The Si-based negative electrode active material may include silicon, silicon-carbon composite, SiOₓ (0<x<2), Si-Q alloy (wherein Q is an element selected from an alkali metal, an alkaline earth metal, a Group 13 element, a Group 14 element, a Group 15 element, a Group 16 element, a transition metal, a rare earth element, or a combination thereof, and is not Si), or a combination thereof. The Sn-based negative electrode active material may include Sn, SnO₂, Sn-R alloy (wherein R is an element selected from an alkali metal, an alkaline earth metal, a Group 13 element, a Group 14 element, a Group 15 element, a Group 16 element, a transition metal, a rare earth element, or a combination thereof, and is not Sn), or a combination thereof. The elements Q and R may be one selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

Alternatively, the silicon-carbon composite may further include crystalline carbon. For example, the silicon-carbon composite may include a core including crystalline carbon and silicon particles, and an amorphous carbon coating layer on the surface of the core.
The Si-based negative electrode active material or the Sn-based negative electrode active material may be used in combination with a carbon-based negative electrode active material.

An amount of the negative electrode active material in the negative electrode active material layer may be 95 wt% to 99 wt% based on a total weight of the negative electrode active material layer.

In an embodiment, the negative electrode active material layer further includes a binder, and may optionally further include a conductive material. An amount of the binder in the negative electrode active material layer may be 1 wt% to 5 wt% based on the total weight of the negative electrode active material layer. In addition, when further including a conductive material, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other, and also to well adhere the negative electrode active material to a current collector. The binder may include a non-aqueous binder, an aqueous binder, a dry binder, or a combination thereof.

Examples of the non-aqueous binder include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be one selected from a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, ethylene-propylene-diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a thickener capable of imparting viscosity may be used together, and the thickener may include, for example, a cellulose-based compound. As the cellulose-based compound, one or more kinds of carboxymethyl cellulose, hydroxypropylmethyl cellulose, methyl cellulose, or an alkali metal salt thereof may be mixed and used. As the alkali metal, Na, K, or Li may be used. An amount of such a thickener used may be 0.1 parts by weight to 3 parts by weight based on 100 parts by weight of the negative electrode active material.

The dry binder is a polymer material capable of fiberization, for example, it may be polytetrafluoroethylene, polyvinylidene fluoride, polyvinylidene fluoride-hexafluoropropylene copolymer, polyethylene oxide, or a combination thereof.

The conductive material is used to impart conductivity to an electrode, and any electronically conductive material may be used as long as it does not cause chemical change in a battery being constructed. Specific examples include a carbon-based material such as natural graphite, artificial graphite, carbon black, acetylene black, Ketjen black, carbon fiber, carbon nanofiber, and carbon nanotube; a metal-based material in a form of metal powder or metal fiber containing g copper, nickel, aluminum, silver, and the like; a conductive polymer such as a polyphenylene derivative; or a mixture thereof.

The negative electrode current collector may be selected from copper foil, nickel foil, stainless steel foil, titanium foil, nickel foam, copper foam, a polymer substrate coated with a conductive metal, and a combination thereof.

As another example, a negative electrode for an all-solid-state rechargeable battery may be a precipitation-type negative electrode. The precipitation-type negative electrode does not include a negative electrode active material when the battery is assembled, but refers to a negative electrode in which lithium metal or the like is precipitated or electrodeposited on the negative electrode during battery charging, and this serves as a negative electrode active material.

FIG. 2 is a schematic cross-sectional view of an all-solid-state rechargeable battery including a precipitation-type negative electrode. Referring to FIG. 2, the precipitation-type negative electrode 400' may include a negative electrode current collector 401 and a negative electrode coating layer 405 on the negative electrode current collector. In an all-solid-state rechargeable battery having such a precipitation-type negative electrode 400', initial charging begins in a state where no negative electrode active material is present, and during charging, lithium metal is precipitated or electrodeposited between the negative electrode current collector 401 and the negative electrode coating layer 405 or on the negative electrode coating layer 405 to form a lithium metal layer 404, which may serve as a negative electrode active material. Accordingly, in an all-solid-state rechargeable battery in which one or more charges have proceeded, the precipitation-type negative electrode 400' may include, for example, a negative electrode current collector 401, a lithium metal layer 404 on the negative electrode current collector, and an negative electrode coating layer 405 on the metal layer. The lithium metal layer 404 means a layer in which lithium metal or the like is precipitated during a battery charging process and may be referred to a metal layer, a lithium layer, a lithium electrodeposition layer, or a negative electrode active material layer.

The negative electrode coating layer 405 may also be called a lithium electrodeposition induction layer or a negative electrode catalyst layer, and may include a metal, a carbonaceous material, or a combination thereof.

The metal may be a lithiophilic metal, and for example, may include gold, platinum, palladium, silicon, silver, aluminum, bismuth, tin, zinc, or a combination thereof, and may be composed of one kind of these or composed of several kinds of alloys. When the metal is present in particle form, its average particle size (D50) may be less than or equal to about 4 µm, for example 10 nm to 4 µm.

The carbonaceous material may be, for example, crystalline carbon, amorphous carbon, or a combination thereof. The crystalline carbon may be, for example, natural graphite, artificial graphite, mesophase carbon microbeads, or a combination thereof. The amorphous carbon may be, for example, carbon black, activated carbon, acetylene black, Denka black, Ketjen black, or a combination thereof. As an example, the carbonaceous material may mean amorphous carbon.

When the negative electrode coating layer 405 includes both the metal and the carbonaceous material, a mixing ratio of the metal and the carbonaceous material may be, for example, a weight ratio of 1:10 to 2:1. In this case, precipitation of lithium metal may be effectively promoted and characteristics of an all-solid-state rechargeable battery may be improved. The negative electrode coating layer 405 may include, for example, a carbonaceous material on which a catalyst metal is supported, or may include a mixture of metal particles and carbonaceous material particles.

The negative electrode coating layer 405 may include, for example, the lithiophilic metal and amorphous carbon, and in this case, precipitation of lithium metal may be effectively promoted. As a specific example, the negative electrode coating layer 405 may include a composite in the form of a lithiophilic metal supported on amorphous carbon.

The negative electrode coating layer 405 may further include a binder, and the binder may be, for example, a conductive binder. In addition, the negative electrode coating layer 405 may further include a filler, a dispersant, an ion conductive material, and the like, which are general additives.

A thickness of the negative electrode coating layer 405 may be, for example, 100 nm to 20 µm, or 500 nm to 10 µm, or 1 µm to 5 µm.

The precipitation-type negative electrode 400' may, as an example, further include a thin film on the surface of the negative electrode current collector, that is, between the negative electrode current collector and the negative electrode coating layer. The thin film may include an element capable of forming an alloy with lithium. The element capable of forming an alloy with lithium may be, for example, gold, silver, zinc, tin, indium, silicon, aluminum, bismuth, etc., and may be composed of one kind of these or composed of several kinds of alloys. The thin film may further flatten a precipitation form of the lithium metal layer 404 and further improve characteristics of an all-solid-state rechargeable battery. The thin film may be formed, for example, by a method such as a vacuum deposition method, a sputtering method, or a plating method. A thickness of the thin film may be, for example, 1 nm to 500 nm.

The lithium metal layer 404 may include lithium metal or a lithium metal alloy. The lithium metal alloy may be, for example, a Li-Al alloy, Li-Sn alloy, Li-In alloy, Li-Ag alloy, Li-Au alloy, Li-Zn alloy, Li-Ge alloy, or Li-Si alloy.

A thickness of the lithium metal layer 404 may be 1 µm to 500 µm, 1 µm to 200 µm, 1 µm to 100 µm, or 1 µm to 50 µm. If the thickness of the lithium metal layer 404 is too thin, it is difficult to perform a role as a lithium reservoir, and if it is too thick, battery volume increases and performance may decrease.

When such a precipitation-type negative electrode is applied, the negative electrode coating layer 405 may serve to protect the lithium metal layer 404 and suppress the precipitation growth of lithium dendrite. Accordingly, short circuit and capacity decrease of an all-solid-state battery are suppressed, and cycle-life characteristics may be improved.

### Solid Electrolyte Layer

The solid electrolyte layer includes a solid electrolyte. The solid electrolyte may be a type of inorganic solid electrolyte, and for example, may include a sulfide-based solid electrolyte, an oxide-based solid electrolyte, a halide-based solid electrolyte, or a combination thereof. A solid electrolyte layer according to an embodiment may include a sulfide-based solid electrolyte.

### Sulfide-based Solid Electrolyte

The sulfide-based solid electrolyte may include, for example, Li₂S-P₂S₅, Li₂S-P₂S₅-LiX (wherein X is a halogen element, for example, I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are each an integer, and Z is Ge, Zn, or Ga), Li₂S-GeS₂, Li₂S-SiS₂-lithium phosphate (Li₃PO₄), Li₂S-SiS₂-LiₚMO_{q} (wherein p and q are integers, and M is P, Si, Ge, B, Al, Ga, or In), or a combination thereof.

Such a sulfide-based solid electrolyte may be obtained by, for example, mixing Li₂S and P₂S₅ in a molar ratio of 50:50 to 90:10 or 50:50 to 80:20 and optionally, performing heat treatment. Within the above mixing ratio range, a sulfide-based solid electrolyte having excellent ionic conductivity may be manufactured. Herein, other components such as SiS₂, GeS₂, and B₂S₃ may be added to further improve the ionic conductivity.

Mechanical milling or a solution method may be applied as a mixing method of sulfur-containing raw materials for preparing a sulfide-based solid electrolyte. The mechanical milling is to make starting materials into particulates by putting the starting materials in a ball mill reactor and fervently stirring them. The solution method may be performed by mixing the starting materials in a solvent to obtain a solid electrolyte as a precipitate. In addition, in the case of heat treatment after mixing, crystals of the solid electrolyte may be more robust and ionic conductivity may be improved. For example, the sulfide-based solid electrolyte may be prepared by mixing sulfur-containing raw materials and performing heat treatment two or more times. In this case, a sulfide-based solid electrolyte having high ionic conductivity and robustness may be prepared.

The sulfide-based solid electrolyte according to an embodiment, for example, may be prepared through a first heat treatment of mixing sulfur-containing raw materials and firing at 120 °C to 350 °C and a second heat treatment of mixing the resultant of the first heat treatment and firing the same at 350 °C to 800 °C. The first heat treatment and the second heat treatment may be performed in an inert gas or nitrogen atmosphere, respectively. The first heat treatment may be performed for 1 hour to 10 hours, and the second heat treatment may be performed for 5 hours to 20 hours. Small raw materials may be milled through the first heat treatment, and a final solid electrolyte may be synthesized through the second heat treatment. Through such two or more heat treatments, a sulfide-based solid electrolyte having high ionic conductivity and high performance may be obtained, and such a solid electrolyte may be suitable for mass production. The temperature of the first heat treatment may be, for example, 150 °C to 330 °C, or 200 °C to 300 °C, and the temperature of the second heat treatment may be, for example, 380 °C to 700 °C, or 400 °C to 600 °C.

As an example, the sulfide-based solid electrolyte may include an argyrodite-type sulfide. The argyrodite-type sulfide-based solid electrolyte has high ionic conductivity close to the range of 10⁻⁴ to 10⁻² S/cm, which is the ionic conductivity of a typical liquid electrolyte at room temperature, and may form a close bond between a positive electrode active material and a solid electrolyte without causing a decrease in ionic conductivity, and furthermore, may form a close interface between an electrode layer and a solid electrolyte layer. An all-solid-state rechargeable battery including this may have improved battery performance such as rate capability, coulombic efficiency, and cycle-life characteristics.

The argyrodite-type sulfide-based solid electrolyte may include, for example, a compound represented by Chemical Formula 11.

[Chemical Formula 11] (LiₐM¹_{b}M²_{c})(P_{d}M³ₑ)(S_{f}M⁴_{g})Xₕ

In Chemical Formula 11, 4≤a≤8, M¹ is Mg, Cu, Ag, or a combination thereof, 0≤b<0.5, M² is Na, K, or a combination thereof, 0≤c<0.5, M³ is Sn, Zn, Si, Sb, Ge, or a combination thereof, 0<d<4, 0≤e<1, M⁴ is O, SOₙ, or a combination thereof, 1.5≤n≤5, 3≤f≤12, 0≤g<2, X is F, Cl, Br, I, or a combination thereof, and 0≤h≤2.

For example, in Chemical Formula 11, a halide element (X) may be essentially included, and in this case, it may be represented as 0<h≤2. For example, in Chemical Formula 11, the element M¹ may be essentially included, and in this case, it may be represented as 0<b<0.5. In Chemical Formula 11, M³ may be understood as an element substituted in a P position and may be 0<e<1. In Chemical Formula 11, M⁴ may be one substituted in an S position and may be 0<g<2 as an example, and f, which is the ratio of S, may be, for example, 3≤f≤7. When M⁴ is SOₙ, SOₙ may be, for example, S₄O₆, S₃O₆, S₂O₃, S₂O₄, S₂O₅, S₂O₆, S₂O₇, S₂O₈, SO₄, or SO₅, and may be for example SO₄.

For example, in Chemical Formula 11, a+b+c+h=7, d+e=1, and f+g+h=6 may be satisfied.

As specific examples, the argyrodite-type sulfide-based solid electrolyte particles may include Li₃PS₄, Li₇P₃S₁₁, Li₇PS₆, Li₆PS₅Cl, Li₆PS₅Br, Li_{5.8}PS_{4.8}Cl_{1.2}, Li6.2PS5.2Br0.8, Li5.75PS4.75Cl1.25, (Li5.69Cu0.06)PS4.75Cl1.25, (Li5.72Cu0.03)PS4.75Cl1.25, (Li5.69Cu0.06)P(S4.70(SO4)0.05)Cl1.25, (Li5.69Cu0.06)P(S4.60(SO4)0.15)Cl1.25, (Li5.72Cu0.03)P(S4.725(SO4)0.025)Cl1.25, (Li5.72Na0.03)P(S4.725(SO4)0.025)Cl1.25, Li_{5.75}P(S_{4.725}(SO₄)_{0.025})Cl_{1.25}, or a combination thereof, but are not limited thereto.

The argyrodite-type sulfide-based solid electrolyte may be prepared, for example, by mixing lithium sulfide, phosphorus sulfide, and optionally lithium halide. Heat treatment may be performed after mixing them. The heat treatment may include, for example, two or more heat treatment steps. Herein, the preparing of the argyrodite-type sulfide-based solid electrolyte may include, as an example, a first heat treatment of mixing raw materials and calcining at 120 °C to 350 °C and a second heat treatment of mixing resultants of the first heat treatment again and calcining at 350 °C to 800 °C.

The sulfide-based solid electrolyte may be in the form of particles, and the average particle diameter (D50) of the particles may be, for example, 0.1 µm to 5.0 µm or 0.1 µm to 3.0 µm, and may be small particles of 0.1 µm to 1.9 µm or large particles of 2.0 µm to 5.0 µm. The sulfide-based solid electrolyte particles may be a mixture of small particles having an average particle diameter of 0.1 µm to 1.9 µm and large particles having an average particle diameter of 2.0 µm to 5.0 µm. The average particle diameter of sulfide-based solid electrolyte particles may be measured with an electron microscope image, and for example, may be one obtained by measuring the size (diameter or length of a major axis) of about 20 particles in a scanning electron microscope image to obtain a particle size distribution, and calculating D50 therefrom.

### Oxide-based Solid Electrolyte

The oxide-based solid electrolyte may include, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂(0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂ based ceramics, garnet-based ceramics Li₃₊ₓLa₃M₂O₁₂ (wherein M is Te, Nb, or Zr; and x is an integer from 1 to 10), or a mixture thereof.

### Halide-based Solid Electrolyte

The solid electrolyte layer may, for example, further include a halide-based solid electrolyte. The halide-based solid electrolyte contains a halogen element as a main component, which may mean that a ratio of a halide element to all elements constituting the solid electrolyte is greater than or equal to 50 mol%, greater than or equal to 70 mol%, greater than or equal to 90 mol%, or 100 mol%. As an example, the halide-based solid electrolyte may not contain a sulfur element.

The halide-based solid electrolyte may contain a lithium element, a metal element other than lithium, and a halogen element. The metal element other than lithium may be Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof. The halogen element may be F, Cl, Br, I, or a combination thereof, and as an example, may be Cl, Br, or a combination thereof. The halide-based solid electrolyte may be represented, for example, by LiₐM₁X₆ (wherein M is Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof, X is F, Cl, Br, I, or a combination thereof, and 2≤a≤3). The halide-based solid electrolyte may include, for example, Li₂ZrCl₆, Li_{2.7}Y_{0.7}Zr_{0.3}Cl₆, Li_{2.5}Y_{0.5}Zr_{0.5}Cl₆, Li_{2.5}In_{0.5}Zr_{0.5}Cl₆, Li₂In_{0.5}Zr_{0.5}Cl₆, Li₃YBr₆, Li₃YCl₆, Li₃YBr₂Cl₄, Li₃YbCl₆, Li_{2.6}Hf_{0.4}Yb_{0.6}Cl₆, or a combination thereof, but is not limited thereto.

### Binder

The solid electrolyte layer may further include a binder. The binder may include, for example, a nitrile-butadiene rubber, a hydrogenated nitrile-butadiene rubber, a styrene-butadiene rubber, an acrylated styrene-butadiene rubber, an acrylonitrile-butadiene rubber, an acrylic rubber, a butyl rubber, a fluorine rubber, a natural rubber, polydimethylsiloxane, polyethylene oxide, polyvinylpyrrolidone, polyvinylpyridine, chlorosulfonated polyethylene, polyvinyl alcohol, polytetrafluoroethylene, polyvinylidene fluoride, polyvinylidene fluoride-hexafluoropropylene copolymer, polyvinyl chloride, carboxylated polyvinyl chloride, polyvinyl fluoride, polyethylene, polypropylene, an ethylene-propylene copolymer, an ethylene-propylene-diene copolymer, polyamideimide, polyimide, poly(meth)acrylate, polyacrylonitrile, polystyrene, polyurethane, a copolymer thereof, or a combination thereof.

The binder may be included in an amount of 0.1 wt% to 3 wt% based on 100 wt% of the solid electrolyte layer, for example, 0.5 wt% to 2 wt%, or 0.5 wt% to 1.5 wt%. When the binder is included in the above range, components in the solid electrolyte layer may be well combined without lowering the ionic conductivity of the solid electrolyte, so durability and reliability of the battery may be improved.

### Other Components

The solid electrolyte layer may optionally further include an alkali metal salt, and/or an ionic liquid, and/or a conductive polymer.

The alkali metal salt may be, for example, a lithium salt. An amount of the lithium salt in the solid electrolyte layer may be greater than or equal to 1 M, for example, 1 M to 4 M. In this case, the lithium salt may improve ionic conductivity by improving lithium ion mobility of the solid electrolyte layer.

The lithium salt is applicable without limitation of the type, and for example, may include LiPF₆, LiBF₄, LiSbF₆, LiAsF₆, LiClO₄, LiAlO₂, LiAlCl₄, LiPO₂F₂, LiCl, LiI, LiSCN, LiN(CN)₂, lithium bis(oxalato)borate (LiBOB), lithium difluoro(oxalato)borate (LiDFOB), lithium difluorobis(oxalato)phosphate (LiDFBP), lithium bis(trifluoromethanesulfonyl)imide (LiTFSI), lithium bis(fluorosulfonyl)imide (LiFSI), lithium bis(pentafluoroethanesulfonyl)imide (LiBETI), lithium trifluoromethane sulfonate, lithium tetrafluoroethane sulfonate, or a combination thereof.

As an example, the lithium salt may be an imide-based lithium salt which is LiTFSI, LiFSI, LiBETI, or a combination thereof. The imide-based lithium salt may maintain or improve ionic conductivity by appropriately maintaining chemical reactivity with an ionic liquid.

The ionic liquid refers to a salt that is in a liquid state at room temperature while being composed of only ions, having a melting point at or below room temperature, or a room-temperature molten salt.

The ionic liquid may be a compound including a) at least one cation selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, or triazolium-based cation, and a mixture thereof, and b) at least one anion selected from BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)2N-, (C₂F₅SO₂)(CF₃SO₂)N-, and (CF₃SO₂)₂N-.

The ionic liquid may be selected from, for example, N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)amide, 1-ethyl-3-methylimidazolium bis(trifluoromethylsulfonyl)amide, or a combination thereof.

A weight ratio of the solid electrolyte and the ionic liquid in the solid electrolyte layer may be 0.1:99.9 to 90:10, and for example, 10:90 to 90:10, 20:80 to 90:10, 30:70 to 90:10, 40:60 to 90:10, or 50:50 to 90:10. A solid electrolyte layer satisfying the above range may maintain or improve ionic conductivity as the electrochemical contact area with an electrode is improved. Accordingly, energy density, discharge capacity, rate capability, etc. of an all-solid-state rechargeable battery may be improved.

The all-solid-state rechargeable battery may be a unit cell having a structure of positive electrode/solid electrolyte layer/negative electrode, a bicell having a structure of negative electrode/solid electrolyte layer/positive electrode/solid electrolyte layer/negative electrode, or a stacked cell in which the structure of the unit cell is repeated.

The shape of the all-solid-state rechargeable battery is not particularly limited, and may be, for example, coin-shaped, button-shaped, sheet-shaped, stacked-shaped, cylindrical, flat, and the like. In addition, the all-solid-state rechargeable battery may be applied to a large-sized battery used in an electric vehicle or the like. For example, the all-solid-state rechargeable battery may also be used in hybrid vehicles such as plug-in hybrid electric vehicles (PHEV). In addition, it may be used in a field requiring a large amount of power storage, and may be used, for example, in an electric bicycle or a power tool. In addition, the all-solid-state rechargeable battery may be used in various fields such as portable electronic devices.

### [Mode for Invention]

Hereinafter, examples and comparative examples of the present invention will be described. The following examples are only examples of the present invention and the present invention is not limited to the following examples.

### Example 1

### 1. Manufacturing of Positive Electrode

A LiNi_{0.8}Co_{0.15}Mn_{0.05}O₂ positive electrode active material coated with Li₂O-ZrO₂ and a lithium argyrodite-type solid electrolyte Li₆PS₅Cl (D50 = 3 µm) and carbon black in powder form having an average particle diameter (D50) of 50 nm were dry mixed in a dry atmosphere having a temperature of 25 °C and a dew point of -40 °C to -45 °C.

Subsequently, a binder solution in which a polyvinylidene fluoride binder was mixed in a 2-ethylhexyl acetate solvent, and a carbon nanotube solution in which L-carbon nanotubes (SWCNT) and 2-ethylhexyl acetate as a solvent were mixed were prepared. To the mixture of the dry mixing, the binder solution was added and mixed, and at this time, excluding the amount of the solvent, 84 wt% of the positive electrode active material, 15 wt% of Li₆PS₅Cl, 0.3 wt% of carbon black, and 1 wt% of the binder were satisfied. To the mixture in which the binder solution was added and mixed, the carbon nanotube solution was added and mixed to prepare a positive electrode active material slurry. At this time, based on 100 wt% of a total of the carbon nanotube and carbon nanoparticle (carbon black), the carbon nanotube was adjusted to be 75 wt% and the carbon black was adjusted to be 25 wt%.

Thereafter, aluminum foil having a thickness of 12 µm was used as a positive electrode current collector, the positive electrode active material slurry was coated in an amount of 22 mg/cm² on one surface of the positive electrode current collector with a bar coater, and this was dried in a convection oven at 80 °C for 10 minutes, and then rolled to manufacture a positive electrode.

### 2. Manufacturing of Solid Electrolyte Layer

An argyrodite-type solid electrolyte Li₆PS₅Cl (D50 = 3 µm) was added to a binder solution in which an acrylic binder (SX-A334, Zeon) was dissolved in an isobutylyl isobutylate (IBIB) solvent, and stirred to prepare a solid electrolyte layer composition. The composition includes 98.5 wt% of a solid electrolyte and 1.5 wt% of a binder. The composition was coated on a release PET film with a bar coater and dried at room temperature to prepare a solid electrolyte layer.

### 3. Manufacturing of Negative Electrode

An Ag/C composite was prepared by mixing carbon black having a primary particle diameter (D50) of about 30 nm and silver (Ag) having an average particle diameter (D50) of about 60 nm in a weight ratio of 3:1, and 0.25 g of the composite was added to 2 g of an NMP solution including 7 wt% of a polyvinylidene fluoride binder and mixed to prepare a negative electrode coating layer composition. This was coated on a nickel foil current collector using a bar coater and vacuum dried to prepare a precipitation-type negative electrode in which a negative electrode coating layer was formed on the current collector.

### 4. Manufacturing of All-solid-state Rechargeable Battery Cell

The prepared positive electrode, negative electrode, and solid electrolyte layer were cut, and the solid electrolyte layer was stacked on the positive electrode, and then the negative electrode was stacked thereon. This was sealed in a pouch form and subjected to warm isostatic press (WIP) at a high temperature of 85 °C at 500 MPa for 30 minutes to manufacture an all-solid-state rechargeable battery cell.

### Example 2

A positive electrode and an all-solid-state rechargeable battery cell were manufactured in substantially the same manner as in Example 1, except that the carbon nanotube was 50 wt% and the carbon black was 50 wt% based on 100 wt% of a total of the carbon nanotube and carbon nanoparticle.

### Comparative Example 1

A positive electrode and an all-solid-state rechargeable battery cell were manufactured in substantially the same manner as in Example 1, except for not using carbon nanoparticle and using a positive electrode active material slurry in which 85 wt% of LiNi_{0.8}Co_{0.15}Mn_{0.05}O₂ positive electrode active material, 13 wt% of lithium argyrodite-type solid electrolyte Li₆PS₅Cl, 1 wt% of polyvinylidene fluoride binder, and 1 wt% of carbon nanotube were mixed.

### Comparative Example 2

A positive electrode and an all-solid-state rechargeable battery cell were manufactured in substantially the same manner as in Example 1, except that the carbon nanotube was 25 wt% and the carbon black was 75 wt% based on 100 wt% of a total of the carbon nanotube and carbon nanoparticle.

### Comparative Example 3

A positive electrode and an all-solid-state rechargeable battery cell were manufactured in substantially the same manner as in Example 1, except that the carbon nanotube was 95 wt% and the carbon black was 5 wt% based on 100 wt% of a total of the carbon nanotube and carbon nanoparticle.

### Evaluation Example 1: SEM Analysis

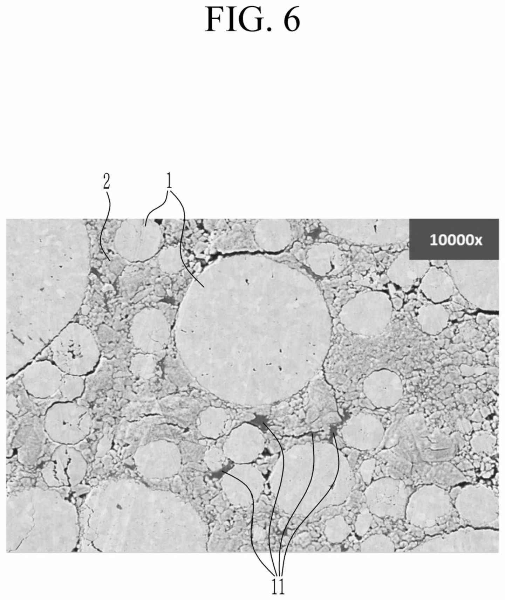

In order to observe the positive electrode active material layer prepared in Comparative Example 1, a cross-sectional specimen was prepared, and an image taken with a scanning electron microscope (SEM) at 10,000 magnification is shown in FIG. 6.

Referring to FIG. 6, in the case of Comparative Example 1 in which only carbon nanotubes were used and carbon nanoparticles were not used as a conductive material, it can be confirmed that the carbon nanotubes 11 in the positive electrode active material layer are aggregated and non-uniformly present.

### Evaluation Example 2: Evaluation of Residual Solvent Amount

The positive electrode active material layers prepared in Examples 1 and 2 were each collected and analyzed by gas chromatography to measure the residual amount (ppm) of 2-ethylhexyl acetate, which is a solvent in the positive electrode active material layer, and the results are shown in Table 1.

**(Table 1)**

| | Example 1 | Example 2 |
|---|---|---|
| Residual amount of solvent (ppm) | 352 | 353 |

Referring to Table 1, it can be confirmed that the positive electrode active materials prepared in Examples 1 and 2 include the low-polarity solvent in an amount of 500 ppm or less based on 100 wt% of the positive electrode active material layer.

### Evaluation Example 3: Viscosity Evaluation

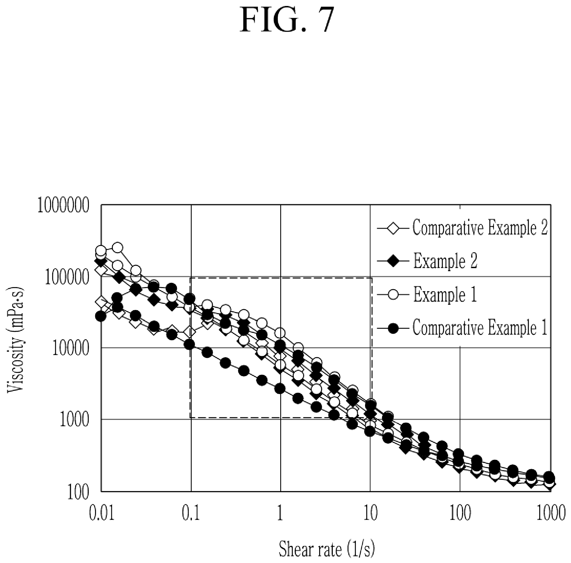

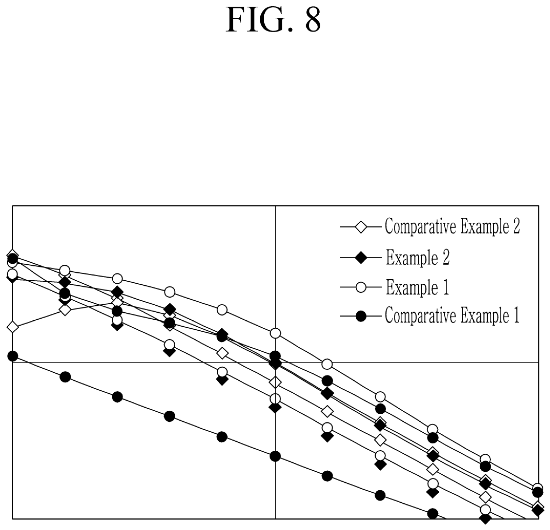

In order to confirm the viscosity change of the slurry according to the variation in the amount of carbon nanoparticles, the viscosity change according to the shear rate (1/s) of the positive electrode active material slurries obtained from Comparative Examples 1 and 2 and Examples 1 and 2 is shown in FIG. 7. Also, an enlarged view enlarging the rectangular portion of FIG. 7 is shown in FIG. 8. In addition, when the shear rate was 0.1 (1/s), 1 (1/s), and 10 (1/s), the viscosity values for Comparative Examples 1 and 2 and Examples 1 and 2 are shown in Table 2. Herein, the viscosity was measured using a rheometer viscometer at a temperature of 25 °C for the positive electrode slurry under a dew point of -45 °C where moisture is controlled, by specifying a shear rate range of 0.01 to 1000.

**(Table 2)**

| Shear rate | Comparative Example 1 | Example 1 | Example 2 | Comparative Example 2 |
|---|---|---|---|---|
| 0.1 | 45,259 | 42,751 | 34,379 | 16,658 |
| 1 | 10,842 | 15,129 | 9813 | 9748 |
| 10 | 1468 | 1570 | 1139 | 1188 |

Referring to the results in FIG. 7, FIG. 8, and Table 2, in the case of Examples 1 and 2, an area of the hysteresis loop decreased through the mixing of carbon nanotubes and carbon nanoparticles compared to Comparative Example 1 in which carbon nanoparticles were not added, and through this, it can be confirmed that the dispersibility of the slurry is more improved.

### Evaluation Example 4: Evaluation of Conductivity and Structural Stability

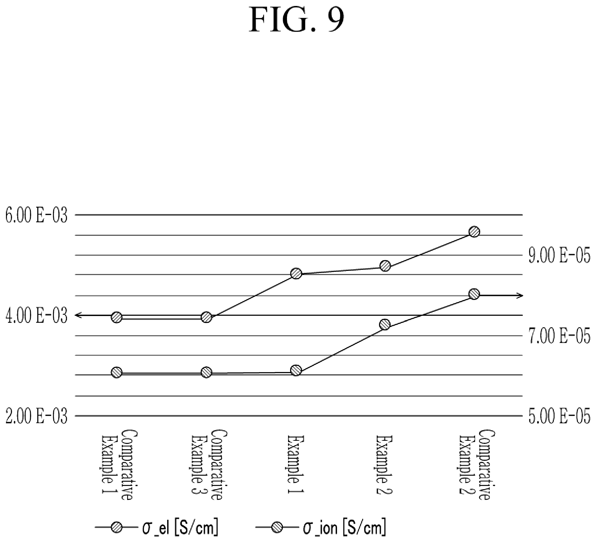

Using the positive electrodes obtained from Comparative Examples 1 to 3 and Examples 1 and 2, the results of measuring the electronic conductivity (σ_el) and ionic conductivity (σ_ion) for the positive electrode plate measured through Electrochemical Impedance Spectroscopy (EIS) are shown in FIG. 9. Herein, EIS was measured by punching a positive electrode single-sided plate into 10 pi, assembling it into a torque cell, and setting it to 45 °C in a constant temperature chamber.

Referring to FIG. 9, it can be confirmed that compared to Comparative Examples 1 and 3, in the case of Examples 1 and 2, both electronic conductivity and ionic conductivity increase as the amount of carbon nanoparticles used together with carbon nanotubes increases.

However, in the case of Comparative Example 2, electronic conductivity and ionic conductivity were excellent due to the high amount of carbon nanoparticles used together with carbon nanotubes, but it was confirmed that there is a problem in structural stability as delamination between an aluminum substrate (foil), which is a positive electrode current collector, and a positive electrode active material layer occurred.

### Evaluation Example 5: Evaluation of Charge/Discharge Characteristics

In order to evaluate the discharge capacity and average discharge voltage for the all-solid-state rechargeable battery cells manufactured in Comparative Example 1 and Example 2, the battery cells were charged with a constant current of 0.1 C until the cell voltage reached 4.25 V in a thermostat at 45 °C, and discharged with a constant current of 0.1 C until the cell voltage reached 2.5 V (1st cycle); charged with a constant current of 0.1 C until the cell voltage reached 4.25 V, and discharged with a constant current of 0.33 C until the cell voltage reached 2.5 V (2nd cycle); charged with a constant current of 0.1 C until the cell voltage reached 4.25 V, and discharged with a constant current of 1.0 C until the cell voltage reached 2.5 V (3rd cycle).

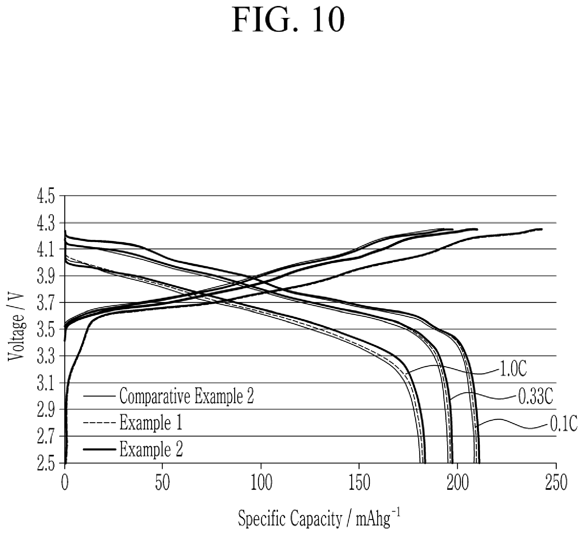

The change in discharge capacity for the all-solid-state rechargeable battery cells manufactured in Comparative Example 1 and Examples 1 and 2 is shown in FIG. 10 and Table 3.

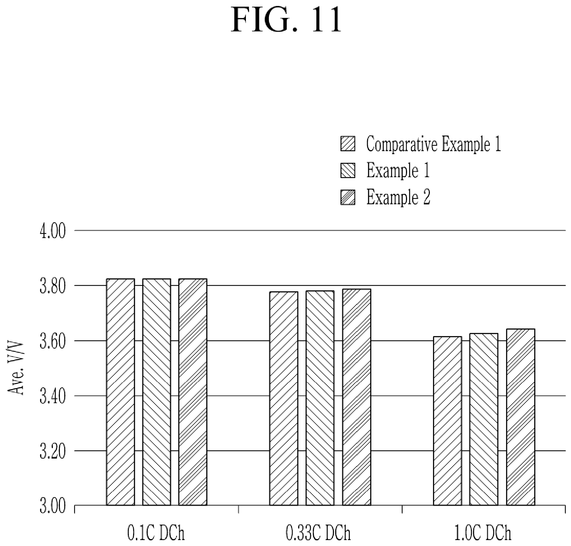

In addition, the results of measuring the average discharge voltage for the all-solid-state rechargeable battery cells manufactured in Comparative Example 1 and Examples 1 and 2 are shown in FIG. 11 and Table 4.

**(Table 3)**

| | | | |
|---|---|---|---|
| Discharge capacity (mAh/g) | 0.1 C | 0.33 C | 1.0 C |
| Comparative Example 1 | 210.1 | 197.2 | 182.8 |
| Example 1 | 210.2 | 197.4 | 183.1 |
| Example 2 | 210.4 | 197.5 | 183.4 |

**(Table 4)**

| | | | |
|---|---|---|---|
| Average discharge voltage (V) | 0.1 C | 0.33 C | 1.0 C |
| Comparative Example 1 | 3.821 | 3.776 | 3.614 |
| Example 1 | 3.822 | 3.778 | 3.622 |
| Example 2 | 3.824 | 3.785 | 3.641 |

Referring to the evaluation results of FIG. 10, FIG. 11, Table 3, and Table 4, in the case of Examples 1 and 2 using mixed carbon nanoparticles, it was confirmed that discharge capacity and average discharge voltage increase in three charge/discharge cycles compared to Comparative Example 1.

Although preferred embodiments have been described in detail above, the scope of the present invention is not limited thereto, and various modifications and improvements of those skilled in the art using the basic concept defined in the following claims also belong to the scope of the present invention.

### Description of Symbols

| | | | |
|---|---|---|---|
| 1: | positive electrode active material | 2: | sulfide-based solid electrolyte |
| 11: | carbon nanotube | 12: | carbon nanoparticle |
| 100: | all-solid-state battery | 200: | positive electrode |
| 201: | positive electrode current collector | 203: | material layer positive electrode active |
| 300: | solid electrolyte layer | 400: | negative electrode |
| 401: | negative electrode current collector | 403: | active material layer negative electrode |
| 400': | precipitation-type negative electrode | 404: | lithium metal layer |
| 405: | negative electrode coating layer | 500: | elastic layer |

## Claims

1. A positive electrode, comprising
a positive electrode current collector; and a positive electrode active material layer on the positive electrode current collector,
wherein the positive electrode active material layer comprises a positive electrode active material, a sulfide-based solid electrolyte, a binder, and a conductive material,
the conductive material comprises a carbon nanotube and a carbon nanoparticle, and
the carbon nanotube is included in an amount of 40 wt% to 90 wt%, and the carbon nanoparticle is included in an amount of 10 wt% to 60 wt% based on 100 wt% of a total of the carbon nanotube and carbon nanoparticle.

2. The positive electrode as claimed in claim 1, wherein
the carbon nanotube is a single-wall carbon nanotube, a double-walled carbon nanotube, a multi-wall carbon nanotube, or a combination thereof.

3. The positive electrode as claimed in claim 1, wherein
the carbon nanoparticle is carbon black, acetylene black, Ketjen black, Denka black, or a combination thereof.

4. The positive electrode as claimed in claim 1, wherein
the carbon nanotube is an L-carbon nanotube.

5. The positive electrode as claimed in claim 1, wherein
the carbon nanoparticle forms an aggregate by connecting primary particles to each other.

6. The positive electrode as claimed in claim 5, wherein
an average particle diameter of the primary particles of the carbon nanoparticle is 1 nm to 50 nm.

7. The positive electrode as claimed in claim 1, wherein
the sulfide-based solid electrolyte comprises an argyrodite-type sulfide-based solid electrolyte represented by Chemical Formula 11. [Chemical Formula 11]
(LiₐM¹_{b}M²_{c})(P_{d}M³ₑ)(S_{f}M⁴_{g})Xₕ
wherein, in Chemical Formula 11, 4≤a≤8, M¹ is Mg, Cu, Ag, or a combination thereof, 0≤b<0.5, M² is Na, K, or a combination thereof, 0≤c<0.5, M³ is Sn, Zn, Si, Sb, Ge, or a combination thereof, 0<d<4, 0≤e<1, M⁴ is O, SOₙ, or a combination thereof, 1.5≤n≤5, 3≤f≤12, 0≤g<2, X is F, Cl, Br, I, or a combination thereof, and 0≤h≤2.

8. The positive electrode as claimed in claim 1, wherein
the binder is a fluorine-based binder.

9. The positive electrode as claimed in claim 1, wherein
the positive electrode active material layer comprises
55 wt% to 95 wt% of the positive electrode active material;
0.1 wt% to 35 wt% of the sulfide-based solid electrolyte; and
0.1 wt% to 5 wt% of the binder, based on 100 wt% of the positive electrode active material layer.

10. The positive electrode as claimed in claim 1, wherein
the positive electrode active material layer further comprises a low-polarity solvent having a polarity index of 0.074 to 0.281.

11. The positive electrode as claimed in claim 10, wherein
the positive electrode active material layer comprises the low-polarity solvent in an amount of less than or equal to 500 ppm based on 100 wt% of the positive electrode active material layer.

12. The positive electrode as claimed in claim 1, wherein
the low-polarity solvent has a polarity index of 0.074 to 0.281 and is selected from a pyridine-based solvent, a benzene-based solvent, an acetate-based solvent, a ketone-based solvent, an ester-based solvent, an ether-based solvent, a carbonate-based solvent, an acrylate-based solvent, an aldehyde-based solvent, a piperidine-based solvent, a sulfite-based solvent, an alkyl-based solvent, a formate-based solvent, or a combination thereof.

13. The positive electrode as claimed in claim 10, wherein
the low-polarity solvent is 2,6-di-tert-butylpyridine, bromobenzene, benzyl chloride, p-chlorotoluene, benzal chloride, o-dichlorobenzene, N,N-dimethylaniline, benzyl bromide, 1,2,3-trichloropropane, methoxy benzene, ethoxybenzene, 2-vinylpyridine, chlorocyclohexane, methyl laurate, ethyl chloroacetate, 2-ethylhexyl acetate, o-chlorobenzylchloride, anisole, diethyl carbonate, ethyl trichloroacetate, n-butyl acrylate, methyl isoamyl ketone, di-tert-butyl ketone, styrene oxide, diketene, ethylhexaaldehyde, n-butyl methacrylate, diisopropyl ketone, sec-amyl acetate, methyl amyl acetate, n-butyl propionate, n-pentyl propionate, n-pentyl propionate, 1-formylpiperidine, butyl benzoate, 4-heptanone, 1,8-cineole, isobutyl methacrylate, benzeneacetonitrile, methyl benzoate, isobutylyl isobutylate, octyl acetate, acetylpyridine, methyl oleate, methyl amyl ketone, 5-methyl-3-heptanone, amyl formate, diisobutyl ketone, ethyl amyl ketone, ethylene sulfite, dibutyl ketone, cyclopentanone, 2-chloropyridine, ethyl phenylacetate, diethyl carbonate, benzaldehyde, isoamyl acetate, methyl hexyl ketone, ethyl benzoate, phenyl acetate, 2,3,4-trifluorotoluene, butyl butyrate, 2,6-lutidine, p-anisaldehyde, n-hexyl acetate, n-butyl acetate, 1-cyanobutane, quinoline, acetic acid heptyl ester, benzyl acetate, benzyl acetate, cyclohexanone, 2,4,6-collidine, methyl decanoate, 3-heptanone, 3-picoline, methyl n-butyl ketone, isophorone, 4-ethylpyridine, 2-picoline, methyl isobutenyl ketone, 4-picoline, 2,4-lutidine, 3,4-lutidine, 3,5-lutidine, cyclohexyl acetate, triethyl phosphate, or a combination thereof.

14. A method of manufacturing positive electrode, comprising
dry mixing a positive electrode active material, a sulfide-based solid electrolyte, and a carbon nanoparticle, and
adding and mixing a binder and a carbon nanotube to a mixture of the dry mixing to obtain a positive electrode active material slurry,
wherein the carbon nanotube is added in an amount of 40 wt% to 90 wt% and the carbon nanoparticle is added in an amount of 10 wt% to 60 wt% based on 100 wt% of a total of the carbon nanotube and carbon nanoparticle.

15. The method of manufacturing the positive electrode as claimed in claim 14, wherein
the adding of the binder and carbon nanotubes is performed by adding a binder solution comprising a binder and a first low-polarity solvent, and a carbon nanotube solution comprising carbon nanotube and a second low-polarity solvent, to the mixture of the dry mixing.

16. The method of manufacturing the positive electrode as claimed in claim 15, wherein
the first low-polarity solvent and the second low-polarity solvent have a polarity index of 0.074 to 0.281.

17. The method of manufacturing the positive electrode as claimed in claim 15, wherein
the binder solution is first added and mixed to the mixture of the dry mixing, and then the carbon nanotube solution is added and mixed.

18. An all-solid-state rechargeable battery, comprising
the positive electrode as claimed in any one of claims 1 to 13;
a negative electrode; and
a solid electrolyte layer between the positive electrode and the negative electrode.

19. The all-solid-state rechargeable battery as claimed in claim 18, wherein
the negative electrode comprises
a negative current collector; and
a negative electrode coating layer disposed on the negative electrode current collector and comprising a lithiophilic metal, a carbonaceous material, or a combination thereof.

20. The all-solid-state rechargeable battery as claimed in claim 19, wherein
the all-solid-state rechargeable battery further comprises a lithium metal layer formed by charging between the negative electrode current collector and the negative electrode coating layer.
